# EUROPEAN PATENT SPECIFICATION

(11) **EP 1 609 038 B1**
(45) Date of publication and mention of the grant of the patent: **16.02.2011**
(21) Application number: 04712135.5
(22) Date of filing: 18.02.2004
(51) Int. Cl.: G06F 9/46

(54) **DATA PROCESSING SYSTEM HAVING A PLURALITY OF PROCESSING ELEMENTS, A METHOD OF CONTROLLING A DATA PROCESSING SYSTEM HAVING A PLURALITY OF PROCESSING ELEMENTS**
DATENVERARBEITUNGSSYSTEM MIT MEHREREN VERARBEITUNGSELEMENTEN, VERFAHREN ZUR STEUERUNG EINES DATENVERARBEITUNGSSYSTEMS MIT MEHREREN VERARBEITUNGSELEMENTEN
SYSTEME DE TRAITEMENT DE DONNEES COMPRENANT UNE PLURALITE D'ELEMENTS DE TRAITEMENT DE DONNEES, ET PROCEDE DE COMMANDE D'UN SYSTEME DE TRAITEMENT DE DONNEES COMPRENANT UNE PLURALITE D'ELEMENTS DE TRAITEMENT DE DONNEES

(30) Priority: 27.02.2003 EP 03100484
(43) Date of publication of application: 28.12.2005
(73) Proprietor: NXP B.V., 5656 AG Eindhoven (NL)
(72) Inventor: RUTTEN, Martijn, J., NL-5656 AA Eindhoven (NL); VAN EIJNDHOVEN, Josephus, T., J., NL-5656 AA Eindhoven (NL); POL, Evert-Jan, D., NL-5656 AA Eindhoven (NL)
(74) Representative: Schouten, Marcus Maria
(86) International application number: PCT/IB2004/050124
(87) International publication number: WO 2004/077206

(56) References cited:
- US-A- 4 649 473
- US-A- 5 519 877
- US-A- 6 073 218
- US-B1- 6 349 378
- EDSGER W. DIJKSTRA: "THE DISTRIBUTED SNAPSHOT OF K.M. CHANDY AND L. LAMPORT"[Online] 7 November 1983 (1983-11-07), pages EWD864A-0-EWD864A-4, XP002342896 NUENEN Retrieved from the Internet: URL:http://www.cs.utexas.edu/users/EWD/ewd 08xx/EWD864a.PDF> [retrieved on 2005-08-31]
- K. MANI CHANDY, LESLIE LAMPORT: "DISTRIBUTED SNAPSHOTS: DETERMINING GLOBAL STATES OF DISTRIBUTED SYSTEMS" ACM TRANSACTIONS ON COMPUTER SYSTEMS, [Online] vol. 3, no. 1, February 1985 (1985-02), pages 63-75, XP002342863 Retrieved from the Internet: URL:http://delivery.acm.org/10.1145/220000 /214456/p63-chandy.pdf?key1=214456&key2=98 34745211&coll=GUIDE&dl=GUIDE&CFID=53582747 &CFTOKEN=25865699> [retrieved on 2005-08-31]

## Description

The invention relates to a data processing system, comprising at least a first processing element and a second processing element for processing a stream of data objects, the first processing element being arranged to pass data objects from the stream of data objects to the second processing element, wherein the first and the second processing element are arranged for execution of an application, the application comprising a set of tasks, and wherein the first and the second processing element are arranged to be responsive to the receipt of a unique identifier.

The invention further relates to a method of controlling a data processing system, the data processing system comprising at least a first processing element and a second processing element for processing a stream of data objects, wherein the first processing element is arranged to pass data objects from the stream of data objects to the second processing element, and wherein the first and the second processing element are arranged for execution of an application, the application comprising a set of tasks, the method of controlling comprising the step of recognizing a unique identifier by one of the first and the second processing element.

A multiple processing element architecture for high performance, data-dependent media processing, for example high-definition MPEG decoding, is known. Media processing applications can be specified as a set of concurrently executing tasks that exchange information solely by unidirectional streams of data. G. Kahn introduced a formal model of such applications in 1974, "The Semantics of a Simple Language for Parallel Programming", Proc. of the IFIP congress 1974, August 5-10, Stockholm Sweden, North-Holland publ. Co, 1974, pp. 471 - 475 followed by an operational description by Kahn and MacQueen in 1977, "Co-routines and Networks of Parallel Programming", Information Processing 77, B. Gilchhirst (Ed.), North-Holland publ., 1977, pp. 993 - 998. This formal model is commonly referred to as a Kahn Process Network.

An application is known as a set of concurrently executable tasks. Information can only be exchanged between tasks by unidirectional streams of data. Tasks should communicate only deterministically by means of a read and write action regarding predefined data streams. The data streams are buffered on the basis of a FIFO behavior. Due to the buffering two tasks communicating through a stream do not have to synchronize on individual read or write actions.

In stream processing, successive operations on a stream of data are performed by different processing elements. For example, a first stream might consist of pixel values of an image, that are processed by a first processing element to produce a second stream of blocks of Discrete Cosine Transformation (DCT) coefficients of 8x8 blocks of pixels. A second processing element might process the blocks of DCT coefficients to produce a stream of blocks of selected and compressed coefficients for each block of DCT coefficients.

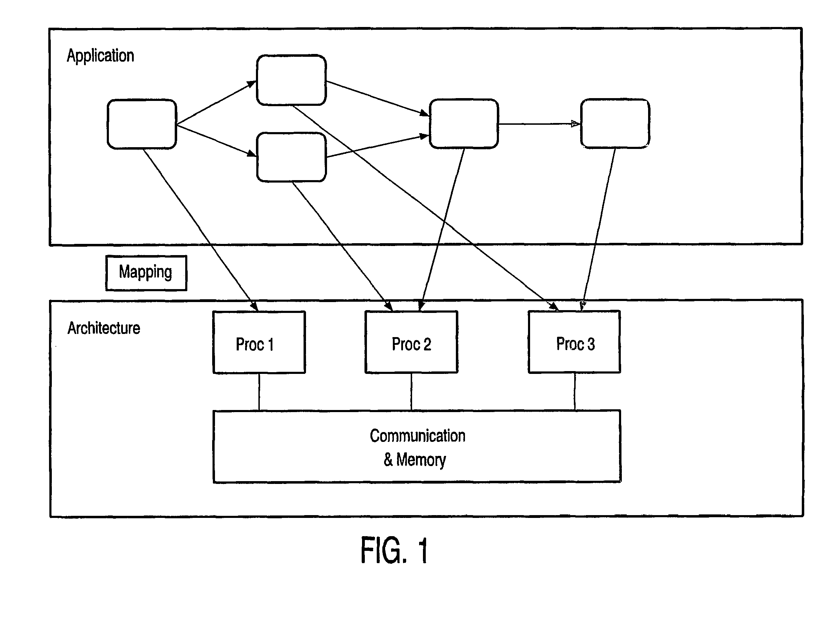

Fig. 1 shows an illustration of the mapping of an application to a multiple processing element architecture as known from the prior art. In order to realize data stream processing, a number of processing elements (Proc 1, Proc 2, Proc 3) are provided, each capable of performing a particular operation repeatedly, each time using data from a next data object from a stream of data objects and/or producing a next data object in such a stream. The streams pass from one processing element to another, so that the stream produced by a first processing element can be processed by a second processing element and so on. One mechanism of passing data from a first to a second processing element is by writing the data blocks produced by the first processing element to a memory.

The data streams in the network are buffered. Each buffer is realized as a FIFO, with precisely one writer and one or more readers. Due to this buffering, the writer and readers do not need to mutually synchronize individual read and write actions on the channel. Reading from a channel with insufficient data available causes the reading task to stall. The processing elements can be dedicated hardware function units which are only weakly programmable. All processing elements run in parallel and execute their own thread of control. Together they execute a Kahn-style application, where each task is mapped onto a single processing element. The processing elements allow multi-tasking, i.e. multiple tasks can be mapped onto a single processing element.

As the state and progress of the overall application is distributed in time and space, application management faces problems with application reconfiguration, analyzing application progress as well as debugging. Especially with multitasking processing elements that dynamically schedule their tasks, the global application is difficult to control. Unsolicited events may occur which ask for an application mode change. Analyzing overall application progress is of continuous concern in systems with data dependent processing and real-time requirements. In addition, debugging applications on multiprocessor systems with multitasking processing elements, requires the ability to set breakpoints per task. Intruding running tasks for mode changes requires comparable measures as needed for setting task breakpoints.

US 6,457,116 describes an apparatus for providing local control of processing elements in a network of processing elements. The processing elements are joined in a complete array by means of several interconnect structures. Each interconnect structure forms an independent network, but the networks do join at input switches of the processing elements. The network structure is an H-tree network structure with a single source and multiple receivers in which individual processing elements may be written to. This configuration network is the mechanism by which configuration memories of the processing elements get programmed and also to communicate the configuration data. The configuration network is arranged so that receivers receive the broadcast within the same clock cycle. A processing element is configured to store a number of configuration memory contexts, and the selected configuration memory context controls the processing element. Each processing element in the networked array of processing elements has an assigned physical identification. Data is transmitted to at least one of the processing elements of the array, the data comprising control data, configuration data, an address mask, and a destination identification. The transmitted address mask is applied to the physical identification and to the destination identification. The masked physical identification and the masked destination identification are compared, and if they match, at least one of the number of processing elements is manipulated in response to the transmitted data. Manipulation comprises selecting one of the number of configuration memory contexts to control the functioning of the processing element. US 6,108,760 describes a comparable apparatus for position independent reconfiguration in a network of processing elements. Manipulation comprises programming a processing element with at least one configuration memory context.

The article "The Distributed Snashot of K.M. CHANDY and L. LAMPORT" of E. W. DIJKSTRA discloses the use of a marker inserted in a data stream (buffer of messages) in order to obtain a stable state snapshot of the machines taking part to atomic actions of a distributed processing. Once a machine receives the marker it performs an action (snapshot) and forward the marker to every output buffer so that the other machines in the graph receive it and follow the same procedure.

It is a disadvantage of the prior art data processing system that the reconfiguration is performed at a specific moment in time. For example, in case of a pipelined network of processing elements, reconfiguring at a specific moment in time means that the data integrity within the pipelined network can not be guaranteed any more.

An object of the invention is to provide a generic solution for global application control in a Kahn-style data processing system.

This object is achieved with a data processing system of the kind set forth, characterized in that the stream of data objects further comprises the unique identifier, and that the first processing element is further arranged to pass the unique identifier to the second processing element.

Passing the unique identifier in the data processing system from one processing element to the other as an element in the ordered stream of data, allows global application control at a unique location in the data space, as opposed to at a single point in time. For example, application reconfiguration or individual task reconfiguration can be performed, while maintaining the pipelined processing as well as maintaining integrity of the data in the stream of data objects. As a result the overall performance of the data processing system is increased, since termination and restart of the execution of the application can be avoided.

An embodiment of the data processing system according to the invention is characterized in that at least one of the processing elements is arranged to insert the unique identifier into the stream of data objects. In case the application is ready for reconfiguration, or a breakpoint should be introduced, one of the existing processing elements is capable of inserting the unique identifier into the data stream, without requiring any additional measures.

An embodiment of the data processing system according to the invention is characterized in that at least one task of the set of tasks is arranged to have a programmable identifier, wherein a corresponding processing element of the first and the second processing elements is arranged to compare the programmable identifier with the unique identifier. The purpose of the programmable identifier is to allow a response to a specific unique identifier that is passed through via the data stream. Responding to a unique identifier is programmed per task, so that each task can respond in an individual way. In this way, the programmable identifier allows selecting a task that should be reconfigured, in case of a multitasking processing element. In case of a match between the programmable identifier and the unique identifier for a running task, it means that task is ready for reconfiguration. The comparison results in a match when these two identifiers have the same value, or for instance, when the programmable identifier has a reserved value that always enforces a match.

An embodiment of the data processing system according to the invention is characterized in that at least one processing element of the first and second processing elements is arranged to pause a corresponding task of the set of tasks, upon a match between the programmable identifier and the unique identifier. An advantage of this embodiment is that the execution of one or more tasks is suspended at a well-defined point in the data space. At a later moment in time reconfiguration of the application can take place, without the tasks involved in the reconfiguration being further on their respective execution paths at that time.

An embodiment of the data processing system according to the invention is characterized in that at least one processing element of the first and second processing elements is arranged to generate an interrupt signal upon a match between the programmable identifier and the unique identifier. By generating an interrupt signal, the corresponding processing element can signal that a task is ready for reconfiguration, or the interrupt signal can be used to determine the progress of the task execution.

An embodiment of the data processing system according to the invention is characterized in that the data processing system further comprises a control processing element, wherein the control processing element is arranged to reconfigure the application, in response to the interrupt signal. The information needed for task reconfiguration is not related to the unique identifier, allowing the mechanism of forwarding and matching of the unique identifier to be independent of the task functionality. As a result, this mechanism can be implemented in a reusable hardware or software component.

An embodiment of the data processing system according to the invention is characterized in that the stream of data objects comprises a plurality of packets, the plurality of packets arranged to store data objects, and a dedicated packet, the dedicated packet arranged to store the unique identifier. The processing elements identify the dedicated packets, for example based on their packet header, and forward these packets unmodified without disrupting the stream of data objects.

According to the invention a method of controlling a data processing system is characterized in that the method of controlling further comprises the following steps: inserting the unique identifier into the stream of data objects, and passing the unique identifier from the first processing element to the second processing element. This method allows run-time reconfiguration, while maintaining data integrity of the application running on the data processing system. Besides reconfiguration, the unique identifier can also be used to define debug breakpoints and to determine application latency.

Further embodiments of the data processing system and the method of controlling a data processing system are described in the dependent claims.
Figure 1 shows an illustration of the mapping of an application onto a data processing system according to the prior art.
Figure 2 shows a schematic block diagram of an architecture of a stream based processing system.
Figure 3 shows a schematic block diagram of an application mapped onto the stream based processing system shown in Figure 2.
Figure 4 shows a schematic block diagram of location ID's programmed into the shells and inserted into the data streams for a stream based processing system according to Figure 2.
Figure 5 shows a flowchart for disabling the execution of a task for a stream based processing system according to Figure 2.

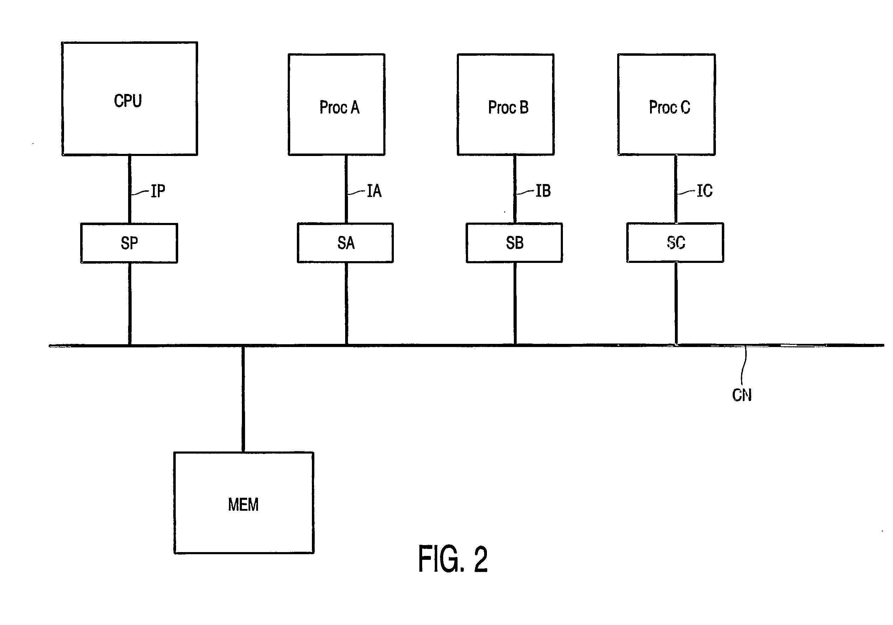

Figure 2 shows a processing system for processing a stream of data objects according to the invention. The system comprises a central processing unit CPU, three coprocessors ProcA, ProcB and ProcC, a memory MEM, shells SP, SA, SB and SC, and a communication network CN. Shells SP, SA, SB and SC are associated with processor CPU and coprocessors ProcA, ProcB and ProcC, respectively. The communication network CN couples the shells SP, SA, SB and SC and the memory MEM. The processor CPU and coprocessors ProcA, ProcB and ProcC are coupled to their corresponding shell SP, SA, SB and SC, via interfaces IP, IA, IB and IC, respectively. In different embodiments, a different number of processors and/or coprocessors may be included into the system. The memory MEM can be an on-chip memory, for example. The processor CPU may be a programmable media processor, while the coprocessors ProcA, ProcB and ProcC are preferably dedicated processors, each being specialized to perform a limited range of stream processings. Each coprocessor ProcA, ProcB and ProcC is arranged to apply the same processing operation repeatedly to successive data objects of a stream. The coprocessors ProcA, ProcB and ProcC may each perform a different task or function, e.g. variable length decoding, run-length decoding, motion compensation, image scaling or performing a DCT transformation. In operation each coprocessor ProcA, ProcB and ProcC executes operations on one or more data streams. The operations may involve, for example, receiving a stream and generating another stream, or receiving a stream without generating a new stream, or generating a stream without receiving a stream, or modifying a received stream. The processor CPU and coprocessors ProcA, ProcB and ProcC are able to process data streams generated by other coprocessors ProcA, ProcB and ProcC, or by processor CPU, or even streams that they have generated themselves. A stream comprises a succession of data objects that are transferred from and to processor CPU and coprocessors ProcA, ProcB and ProcC, via communication network CN and memory MEM. Interfaces IP, IA, IB and IC are processor interfaces and these are customized towards the associated processor CPU and coprocessors ProcA, ProcB and ProcC, in order to be able to handle the specific needs of processor CPU and coprocessors ProcA, ProcB and ProcC. Accordingly, the shells SP, SA, SB and SC have a (co)processor specific interface, but the overall architecture of the shells SP, SA, SB and SC is generic and uniform for all (co)processors in order to facilitate the re-use of the shells in the overall system architecture, while allowing the parameterization and adoption for specific applications. In a different embodiment, the system can have a more dedicated application specific interconnect structure between the (co)processors, shells and memory, with multiple connections and multiple specialized buffers for data storage. In yet another embodiment, the system may comprise multiple programmable processors for processing streams of data objects, and in such a system the functionality of the shells can be implemented in software.

The shells SP, SA, SB and SC comprise a reading/writing unit for data transport, a synchronization unit and a task-switching unit. The shells SP, SA, SB and SC communicate with the associated (co)processor on a master/slave basis, wherein the (co)processors acts as a master. Accordingly, the shells SP, SA, SB and SC are initialized by a request from the corresponding (co)processor. Preferably, the communication between the corresponding (co)processor and the shells SP, SA, SB and SC is implemented by a requestacknowledge handshake mechanism in order to hand over argument values and wait for requested values to return. Therefore the communication is blocking, i.e. the respective thread of control waits for their completion. The functionality of the shells SP, SA, SB and SC can be implemented in software and/or in hardware.

The reading/writing unit preferably implements two different operations, namely the read-operation enabling the processor CPU and coprocessors ProcA, ProcB and ProcC to read data objects from the memory MEM, and the write-operations enabling the processor CPU and coprocessors ProcA, ProcB and ProcC to write data objects into the memory MEM.

The synchronization unit implements two operations for synchronization to handle local blocking conditions occurring at an attempt to read from an empty FIFO or to write to a full FIFO, respectively.

The system architecture according to Figure 2 supports multitasking, meaning that several application tasks may be mapped onto a single processor CPU or coprocessor ProcA, ProcB and ProcC. A multitasking support is important in achieving flexibility of the architecture towards configuring a range of applications and reapplying the same hardware processors at different places in a data processing system. Multitasking implies the need for a task-switching unit as the process that decides which task the (co)processor must execute at which point in time to obtain proper application progress. Preferably, the task scheduling is performed at run-time as opposed to a fixed compile-time schedule.

The processor CPU comprises a control processor, for controlling the data processing system. The stream of data objects comprises a plurality of data packets that hold the data. For efficient packetization of the data, variable length packets are used on the data streams.

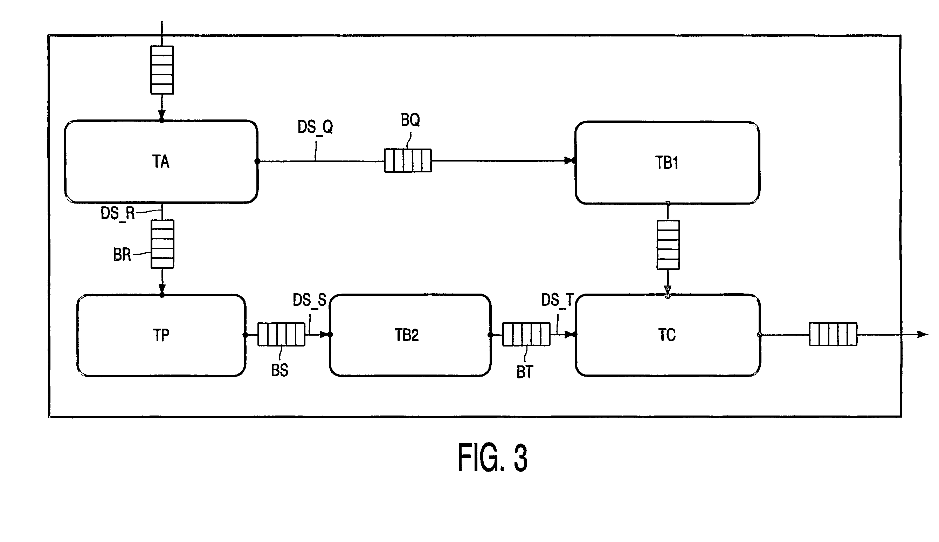

Figure 3 shows a schematic block diagram of an example application mapped onto the stream based processing system, as described above. The application is executed as a set of tasks TA, TB 1, TB2, TC and TP, that communicate via data streams, including data streams DS_Q, DS_R, DS_S and DS_T. Task TA is executed by coprocessor ProcA, task TB1 and TB2 are executed by coprocessor ProcB, task TC is executed by coprocessor ProcC and task TP is executed by processor CPU. In alternative embodiments, an application may consist of a different set of tasks, with a different mapping onto the processor CPU and coprocessors ProcA, ProcB and ProcC. The data streams DS_Q, DS_R, DS_S and DS_T are buffered data streams as they include a FIFO buffer BQ, BR, BS and BT, respectively. The FIFO buffers BQ, BR, BS and BT are physically allocated in the memory MEM.

During execution of an application, a task may have to be dynamically added to or removed from the application graph, as shown in Figure 3. In order to perform this operation, without causing inconsistency problems with the data stored in the FIFO buffers BQ, BR, BS and BT, the task reconfiguration is performed at a specific location in the data space. In order to be able to perform this reconfiguration, a unique identifier in the form of a so-called location ID is inserted into the data stream and this location ID is stored in a dedicated packet. A uniform packet header, for the data packets as well as the location ID packet, contains information on the packet type and its payload size. Location ID packets can be discerned from other packets by their unique packet type. The shells SP, SA, SB and SC contain a task table, comprising a programmable field for each task mapped onto the corresponding processor CPU and coprocessor ProcA, ProcB and ProcC. The programmable field is used for storing a programmed location ID. The programmed location ID can be implemented by means of a memory mapped IO (MMIO) register.

The processor CPU and the coprocessors ProcA, ProcB and ProcC parse the incoming data stream, and are capable of recognizing location ID packets. Upon recognition of a location ID packet, the processor CPU and coprocessors ProcA, ProcB and ProcC forward the location ID packet to its output data streams. Upon receiving a location ID packet, the processor CPU and coprocessor ProcA, ProcB and ProcC also pass the payload from the packet, i.e. the location ID, to its corresponding shell SP, SA, SB and SC via the corresponding interface IP, IA, IB and IC, together with an identifier of the corresponding task, i.e. a task ID, that is currently being executed. Upon reception of a location ID and a task ID from the processor CPU or coprocessor ProcA, ProcB and ProcC, the corresponding shell SP, SA, SB and SC compares the received location ID with the programmed location ID, for the task having said task ID. Upon a match, the shell SP, SA, SB and SC suspends further processing of said task by sending a signal to the corresponding processor CPU or coprocessor ProcA, ProcB and ProcC, and also sends an interrupt signal to the control processor.

Subsequently, the control processor can analyze or reconfigure the local task state under software control. After reconfiguration, the control processor instructs the shell SP, SA, SB and SC to arrange resumption of said task by the corresponding processor CPU or coprocessor ProcA, ProcB and ProcC.

Processor CPU and coprocessor ProcA, ProcB and ProcC are capable of generating location ID packets and inserting these into the stream of data objects. Typically, these location ID packets are inserted only at predefined locations into the data stream, for example at the end of an MPEG frame. The processor CPU and the coprocessor ProcA, ProcB and ProcC are instructed to insert such a location ID packet into the data stream by the control processor, or indirectly by the corresponding shell SP, SA, SB and SC upon a request for a new task from the (co) processor.

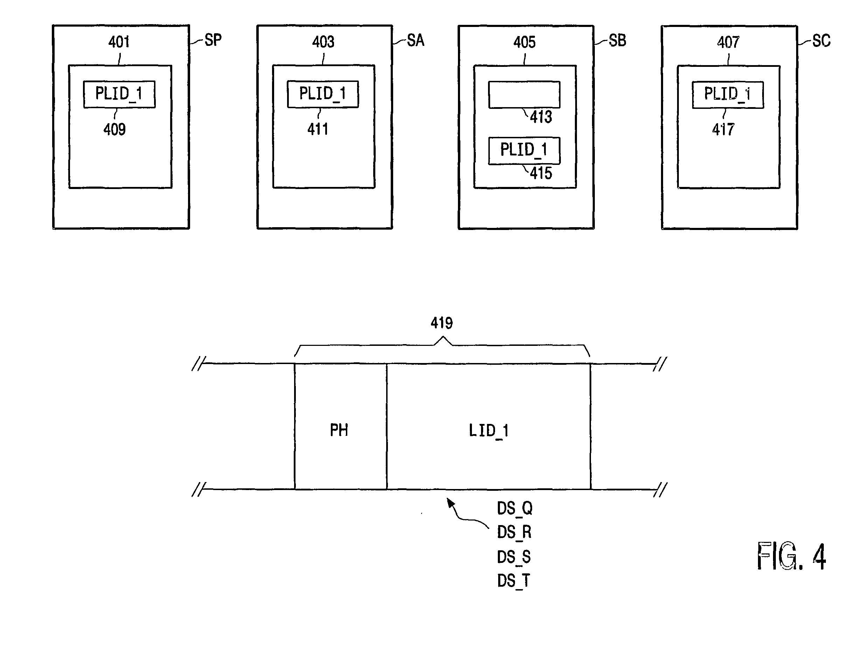

Figure 4 shows shells SP, SA, SB and SC in more detail. Shell SP comprises a task table 401, shell SA comprises a task table 403, shell SB comprises a task table 405 and shell SC comprises a task table 407. The task table 401 comprises a programmable field 409 for task TP, task table 403 comprises a programmable field 411 for task TA, task table 405 comprises programmable fields 413 and 415 for tasks TB_1 and TB_2 respectively, and task table 407 comprises programmable field 417 for task TC. Task tables 401, 403, 405 and 407 may comprise more programmable fields for different tasks running on the corresponding processor CPU and coprocessors ProcA, ProcB and ProcC, not shown in Figure 4. Figure 4 also shows data streams DS_Q, DS_R, DS_S and DS_T comprising a location ID packet 419. The location ID packet 419 comprises a packet header PH. The data streams DS_Q, DS_R, DS_S and DS_T also comprise a plurality of data packets, not shown in Figure 4, both prior to and after the location ID packet 419. The data streams DS_Q, DS_R, DS_S and DS_T may also comprise more location ID packets, not shown in Figure 4.

Referring again to Figure 2, 3 and 4, the control processor may decide to perform an application reconfiguration, implying the dynamical removal of task TP from the set of tasks TP, TA, TB 1, TB2 and TC, and to directly connect task TA to task TB2. The control processor programs a location ID PLID_1 into the shells SP, SA and SB, by writing this location ID to the corresponding task table 401, 403 and 405, in the programmable fields 409, 411 and 415 of tasks TP, TA and TB2, respectively. The control processor instructs coprocessor ProcA to generate the location ID packet, by storing the location ID as well information when a location ID packet, containing said location ID, should be generated, into a dedicated register for task TA in the task table of shell SA. Based on said information stored in shell SA, a location ID packet 419 containing location ID LID_1 is inserted into the data streams DS_Q and DS_R by coprocessor ProcA, under control of task TA. Task TA signals that it has recognized, by creating, location ID LID_1, and instructs coprocessor ProcA to send its task ID as well as location ID LID_1 to shell SA, via interface IA. Using the received task ID of task TA, shell SA compares the received location ID LID_1 with the programmed location ID PLID_1 for task TA and decides that these match. Shell SA stops further processing of task TA by coprocessor ProcA, and sends an interrupt signal to the control processor. Task TP recognizes location ID packet 419 in its input data stream DS_R, from information on the type of packet stored in the packet header PH, and instructs processor CPU to forward location ID packet 419 to its output data stream DS_S. Task TP also instructs processor CPU to pass the recognized location ID LID_1 together with its task ID to shell SP, via interface IP. Using the received task ID of task TP, shell SP compares the received location ID LID_1 with the programmed location ID PLID_1 for task TP and decides that these match. Shell SP stops further processing of task TP by processor CPU and sends an interrupt signal to the control processor. Task TB2 recognizes location ID packet 419 in its input data streams DS_S, from information on the type of packet stored in the packet header PH, and instructs coprocessor ProcB to forward the location ID packet 419 to its output data stream DS_T. Task TB2 also instructs coprocessor ProcB to pass the recognized location ID LID_1 together with its task ID to shell TB, via interface IB. Using the received task ID, shell TB compares the received location ID LID_1 with the programmed location ID PLID_1 for task TB2 and decides that these match. Shell SB stops further processing of task TB2 by coprocessor ProcB and sends an interrupt signal to the control processor. Task TB1 and task TC also recognize the location ID packet 419 in their respective input data streams from information on the type of packet stored in the packet header PH. Task TB1 and task TC instruct their corresponding coprocessor TB and TC to forward the location ID packet 419 to their respective output data streams, and the recognized location ID LID_1 is also sent to their corresponding shells SB and SC, together with the corresponding task ID. Shells SB and SC detect that for the correspondingly received task ID no programmed location ID's exist and do not take any further action in this respect. In different embodiments, different programmed location ID's may exist in the task table of shells SP, SA, SB and SC for a given task, and in this case a received location ID corresponding to that task is compared to all programmed location ID's to verify if there is a match. Since tasks TA, TP and TB2 stopped processing at the same location in the data stream, FIFO buffers BR and BS are empty. The control processor removes task TP from the application graph and reconnects tasks TA and TB2, for example via data stream DS_R using FIFO buffer BR, and frees data stream DS_S as well as FIFO buffer BS. The control processor instructs to restart task TA and TB2 by writing information into the corresponding shells SA and SB.

The concept of location ID's allows run-time application reconfiguration while maintaining data integrity of the application graph in a multiprocessor system. As a result, no termination and restart of the execution of the application is required, increasing the overall performance of the data processing system. Application reconfiguring can entail: changing parameters of one or more tasks, modifying buffer sizes or their location in memory, modifying the task interconnect structures, modifying the mapping or tasks to (co)processors, instantiating and connecting more tasks or buffers, removing and disconnecting tasks or buffers, for example. For a multi-tasking processor, the processor can continue processing other tasks while reconfiguration takes place. Two special programmable location ID values are reserved to match any received location ID or none at all.

In different embodiments, the concept of location ID's can be used for analyzing overall application progress or debugging applications, on multiprocessor systems with multi-tasking processing elements. The location ID's allow to set debug breakpoints per task at unique positions in the data processing, or can be used to determine application latency. In case of analyzing the overall application progress, it is not required to pause the active task, but for example only generating an interrupt signal will suffice. Using that interrupt signal the progress can be determined.

The information needed for task reconfiguration is not part of the location ID packet, which allows the mechanism of forwarding the location ID packet, matching the location ID with the programmed location ID, and signaling an interrupt to the control processor, to be independent of the task functionality. As a result, the implementation of said mechanism can be done by means of a reusable hardware or software component.

In different embodiments, the processor CPU or coprocessors ProcA, ProcB and ProcC are arranged to store the value of the encountered location ID, as well as the result of the match between the location ID and the programmed location ID in their corresponding shell SP, SA, SB and SC. In another embodiment, the processor CPU or coprocessors ProcA, ProcB and ProcC are arranged to store only the result of the match between the location ID and the programmed location ID in their corresponding shell SP, SA, SB and SC. Instead of receiving an interrupt signal, the control processor itself investigates the result of the match at a later moment in time, for example by means of a polling mechanism. In yet another embodiment, the processor CPU or coprocessors ProcA, ProcB and ProcC are arranged to store only the value of the encountered location ID. The stored value of the location ID can indicate if this location ID has already passed the corresponding (co)processor, via the data stream.

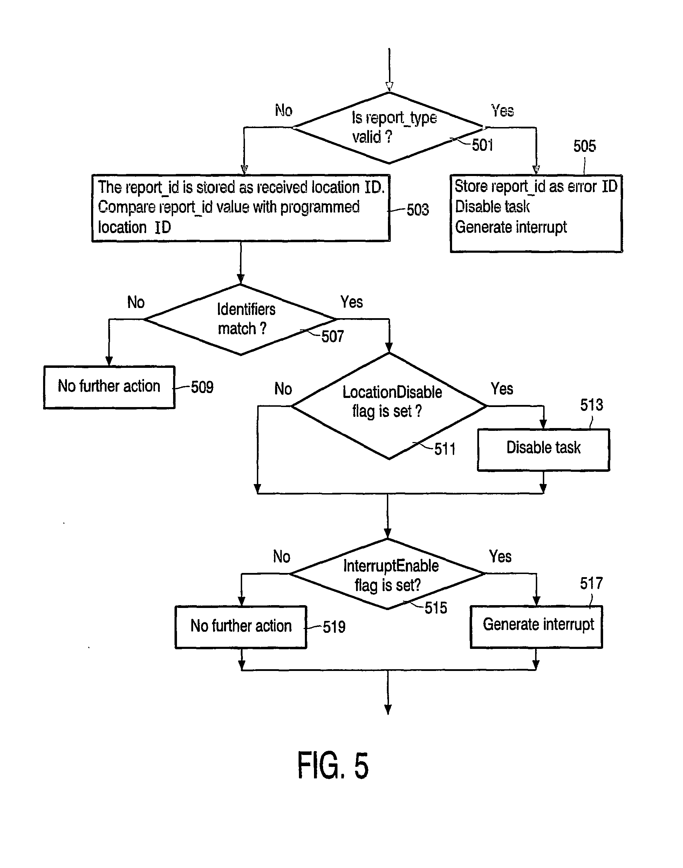

The task-switching unit of shells SP, SA, SB and SC is responsible for selecting tasks to execute on the corresponding processor CPU or coprocessor ProcA, ProcB and ProcC. The interfaces IP, IA, IB and IC implement the mechanism for receiving and matching the location ID detected by the processor CPU and coprocessor ProcA, ProcB and ProcC, respectively. Implementation of said mechanism can be done by means of a so-called Report interface. The processor CPU and coprocessor ProcA, ProcB and ProcC can report messages to the task-switching unit of shells SP, SA, SB and SC via the corresponding interface IP, IA, IB and IC by calling Report (task_id, report_type, report_id). The task_id corresponds to the task ID of the active task from which the Report request is issued, report_type indicates either an error condition or a valid location ID, and report_id contains the location ID. The task tables 401, 403, 405 and 407 in the corresponding shells SP, SA, SB and SC further comprise five programmable fields for each task, not shown in Figure 4, for storing an Enable flag, a LocationDisable flag, an InterruptEnable flag, a ReportType and a ReportId, respectively. If the LocationDisable flag is set, the active task is disabled when the report_id matches the programmed location ID, on a Report request with a valid report_type from the corresponding processor CPU or coprocessor ProcA, ProcB and ProcC. If the LocationDisable flag is not set in this case, the corresponding task should not be disabled. If the Enable flag is set for a task, that task may execute on the corresponding processor CPU or coprocessor ProcA, ProcB and ProcC. As long as the Enable flag is not set for a task, that task will never execute on the corresponding processor CPU or coprocessor ProcA, ProcB and ProcC. Figure 5 shows a flowchart for disabling the execution of a task. On a Report request, the task-switching unit determines whether the report_type argument indicates an error condition (501). If the report_type argument indicates an error condition, the report_id argument is stored as an error identifier in the ReportId field of the task table entry of the selected task, using task_id. Furthermore, the report_type argument is stored in the ReportType field, the active task is disabled by resetting the corresponding Enable flag in the task table, and an interrupt signal is generated (505). In case the report_type argument is valid, the teport_id argument is stored as the received location ID in the task table ReportId field, using the task_id in order to select the correct task table entry, and the report_type is stored as a valid identifier in the ReportType field of the task table entry of the selected task, using task_id as well (503). When the task-switching unit has received a valid report_type, the task-switching unit compares the received report_id with the programmed location ID (503), stored in the programmable field of the task table, and determines if there is a match (507). In case these do not match, no further action is taken (509). In case the received repoft_id matches the programmed location ID, and the LocationDisable flag is not set (509), the corresponding task continues processing. This may be useful to measure run-time the progress of a task. In case the LocationDisable flag is set (511), resetting the Enable flag in the task table disables the corresponding task (513). Furthermore, in both cases, if the InterruptEnable flag of the corresponding task is set (515), an interrupt signal is generated (517). If the InterruptEnable flag is not set, no further action is taken (519). Two programmed location ID values have a special semantics: the programmed location ID never matches a report_id if the first is set to all zeros, and the programmed location ID matches all report_id's if the first is set to all ones.

In some embodiments the processor CPU and coprocessors ProcA, ProcB and ProcC do not forward the location ID packet to all their output data streams. The intention of location ID packets in a flow of data packets through the entire application graph is such that each task will once check the location ID value against its programmed location ID values, if any, in its corresponding shell SP, SA, SB and SC in order to allow task reconfiguration. In some cases the application graph contains cycles, and then it should be avoided that these location ID packets will remain running around within the application graph. The continuous circulation of location ID packets in an application graph can be avoided by not forwarding the location ID packets to all of the output data streams of the set of tasks, as will be clear for the person skilled in the art.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A data processing system, comprising:
- at least a first processing element (CPU, ProcA, ProcA, ProcC) and a second processing element (CPU, ProcA, ProcB, ProcC) for processing a stream of data objects (DS_Q, DS_ R, DS_S, DS_T), the first processing element being arranged to pass data objects from the stream of data objects to the second processing element,
wherein the first and the second processing element (CPU, ProcA, ProcB, ProcC) are arranged for execution of an application, the application comprising a set of tasks (TP, TA, TB1, TB2, TC), each of the first and the second processing element being arranged to execute one or more tasks from the set of tasks,
and wherein at least one of the first and the second processing element is arranged to be responsive to the receipt of a unique identifier (LID_1),
**characterized in that**,
- the stream of data objects further comprises the unique identifier, and that the first processing element is further arranged to pass the unique identifier to the second processing element,
wherein at least one task of the set of tasks (TP, TA, TB1, TB2, TC) is arranged to have a programmable identifier (PLID_1), wherein a corresponding processing element of the first and the second processing elements (CPU, ProcA, ProcB, ProcC) is arranged to compare the programmable identifier (PLID_1) with the unique identifier (LID_1), and
wherein at least one processing element of the first and second processing elements (CPU, ProcA, ProcB, ProcC) is arranged to pause a corresponding task of the set of tasks (TP, TA,TB1, TB2, TC) upon a match between the programmable identifier (PLID_1) and the unique identifier (LID_1).

2. A data processing system according to claim 1, **characterized in that** at least one of the processing elements (CPU, ProcA, ProcB, ProcC) is arranged to insert the unique identifier (LID_1) into the stream of data objects (DS_Q, DS_R, DS_S, DS_T).

3. A data processing system according to claim 1, **characterized in that** at least one processing element of the first and second processing elements (CPU, ProcA, ProcB, ProcC) is arranged to generate an interrupt signal upon a match between the programmable identifier (PLID_1) and the unique identifier (LID_1).

4. A data processing system according to claim 1, **characterized in that** at least one processing element of the first and second processing elements (CPU, ProcA, ProcB, ProcC) is arranged to store the unique identifier(LID_1).

5. A data processing system according to claim 1, **characterized in that** at least one processing element of the first and second processing elements (CPU, ProcA, ProcB, ProcC) is arranged to store the result of the comparison of the programmable identifier (PLID_1) with the unique identifier (LID_1).

6. A data processing system according to claim 3, **characterized in that** the data processing system further comprises a control processing element, wherein the control processing element is arranged to reconfigure the application, in response to the interrupt signal.

7. A data processing system according to claim 1, **characterized in that** the stream of data objects (DS_Q, DS_R, DS_S, DS_T) comprises:
- a plurality of packets, the plurality of packets being arranged to store data objects;
- a dedicated packet (419), the dedicated packet being arranged to store the unique identifier (LID_1).

8. A method of controlling a data processing system, the data processing system comprising at least a first processing element (CPU, ProcA, ProcB, ProcC) and a second processing element (CPU, ProcA, ProcB, ProcC) for processing a stream of data objects (DS_ Q, DS_R, DS_S, DS_T), wherein the first processing element is arranged to pass data objects from the stream of data objects to the second processing element, and wherein the first and the second processing element are arranged for execution of an application, the application comprising a set of tasks (TP, TA, TB1, TB2, TC), each of the first and the second processing element being arranged to execute one or more tasks from the set of tasks, the method of controlling comprising the following step:
- recognizing a unique identifier (LID_1) by at least one of the first and the second processing element,
**characterized in that** the method of controlling further comprises the following steps:
- inserting the unique identifier into the stream of data objects,
- passing the unique identifier from the first processing element to the second processing element,
- programming an identifier (PLID_1) in at least one task of the set of tasks (TP, TA, TB1, TB2, TC),
- comparing the unique identifier (LID_1) with the programmed identifier (PLID_1) by a corresponding processing element of the first and the second processing elements (CPU, ProcA, ProcB, ProcC),
- pausing a task of the set of tasks (TP, TA, TB 1, TB2, TC) by a corresponding processing element of the first and second processing elements (CPU, ProcA, ProcB, ProcC) upon a match between the programmable identifier (PLID_1) of said task and the unique identifier (LID_1).

9. A method of controlling a data processing system according to claim 8, **characterized in that** the step of inserting the unique identifier into the stream of data objects (DS_Q, DS_R, DS_S, DS_T) is performed by at least one of the processing elements (CPU, ProcA, ProcB, ProcC).

10. A method of controlling a data processing system according to claim 8, **characterized in that** the method further comprises the following step:
- generating an interrupt signal by a processing element of the first and second processing elements (CPU, ProcA, ProcB, ProcC) upon a match between the programmable identifier (PLID_1) of a corresponding task of the plurality of tasks (TP, TA,TB1, TB2, TC) and the unique identifier (LID_1).

11. A method of controlling a data processing system according to claim 8, **characterized in that** the method further comprises the following step:
- storing the unique identifier (LID_1) by a processing element of the first and second processing elements (CPU, ProcA9 ProcB, ProcC) for a corresponding task of the plurality of tasks (TP, TA,TB1, TB2, TC).

12. A method of controlling a data processing system according to claim 8, **characterized in that** the method further comprises the following step:
- storing the result of the comparison of the programmable identifier (PLID_1) with the unique identifier (LID_1) by a processing element of the first and second processing elements (CPU, ProcA, ProcB, ProcC) for a corresponding task of the plurality of tasks (TP, TA,TB1, TB2, TC).

13. A method of controlling a data processing system according to claim 10, **characterized in that** the data processing system further comprises a control processing element and that the method further comprises the step of:
- reconfiguring the application by the control processing element, in response to the interrupt signal.

14. A method of controlling a data processing system according to claim 8, **characterized in that** the stream of data objects (DS_Q, DS_R, DS_S, DS_T) comprises:
- a plurality of packets, the plurality of packets being arranged to store data objects,
- a dedicated packet (419), being arranged to store the unique identifier(LID_1).

## Patentansprüche

1. Datenprozessierungssystem, welches aufweist:
zumindest ein erstes Prozessierungselement (CPU, ProcA, ProcB, ProcC) und ein zweites Prozessierungselement (CPU, ProcA, ProcB, ProcC) zum Prozessieren eines Stroms von Datenobjekten (DS_Q, DS_R, DS_S, DS_T), wobei das erste Prozessierungselement dazu eingerichtet ist, Datenobjekte des Stromes von Datenobjekten an das zweite Prozessierungselement zu übergeben,
wobei das erste und das zweite Prozessierungselement (CPU, ProcA, ProcB, ProcC) für die Ausführung einer Applikation eingerichtet sind, wobei die Applikation ein Set von Aufgaben (TP, TA, TB1, TB2, TC) aufweist, wobei jedes von dem ersten und dem zweiten Prozessierungselement dazu eingerichtet ist, ein oder mehrere Aufgaben des Sets von Aufgaben auszuführen
und wobei zumindest eines von dem ersten und dem zweiten Prozessierungselement dazu eingerichtet ist, auf den Empfang eines eindeutigen Identifizierers (LID_1) zu reagieren,
**dadurch gekennzeichnet, dass**
der Strom von Datenobjekten ferner den eindeutigen Identifizierer aufweist und dass das erste Prozessierungselement ferner dazu eingerichtet ist, den eindeutigen Identifizier an das zweite Prozessierungselement zu übergeben,
wobei zumindest eine Aufgabe des Sets an Aufgaben (TP, TA, TB1, TB2, TC) dazu eingerichtet ist, einen programmierbaren Identifizierer (PLID_1) zu haben, wobei ein korrespondierendes Prozessierungselement von dem ersten und dem zweiten Prozessierungselementen (CPU, ProcA, ProcB, ProcC) dazu eingerichtet ist, den programmierbaren Identifizierer (PLID_1) mit dem eindeutigen Identifizierer (LID_1) zu vergleichen und
wobei zumindest ein Prozessierungselement von den ersten und zweiten Prozessierungselementen (CPU, ProcA, ProcB, ProcC) dazu eingerichtet ist, auf ein Übereinstimmen zwischen dem programmierbaren Identifizierer (PLID_1) und dem eindeutigen Identifizierer (LID_1) hin eine korrespondierende Aufgabe des Sets an Aufgaben (TP, TA, TB1, TB2, TC) anzuhalten.
AD:RH:ck

2. Ein Datenprozessierungssystem gemäß Anspruch 1, **dadurch gekennzeichnet, dass** zumindest eines der Prozessierungselemente (CPU, ProcA, ProcB, ProcC) dazu eingerichtet ist, den eindeutigen Identifizierer (LID_1) in den Strom von Datenobjekten (DS_Q, DS_R, DS_S, DS_T) einzufügen.

3. Ein Datenprozessierungssystem gemäß Anspruch 1, **dadurch gekennzeichnet, dass** zumindest ein Prozessierungselement von den ersten und zweiten Prozessierungselementen (CPU, ProcA, ProcB, ProcC) dazu eingerichtet ist, auf ein Übereinstimmen zwischen dem programmierbaren Identifizierer (PLID_1) und dem eindeutigen Identifizierer (LID_1) hin ein Interruptsignal zu erzeugen.

4. Ein Datenprozessierungssystem gemäß Anspruch 1, **dadurch gekennzeichnet, dass** zumindest eines von den ersten und zweiten Prozessierungselementen (CPU, ProcA, ProcB, ProcC) dazu eingerichtet ist, den eindeutigen Identifizierer (LID_1) zu speichern.

5. Ein Datenprozessierungssystem gemäß Anspruch 1, **dadurch gekennzeichnet, dass** zumindest ein Prozessierungselement von den ersten und zweiten Prozessierungselementen (CPU, ProcA, ProcB, ProcC) dazu eingerichtet ist, das Ergebnis des Vergleichs des programmierbaren Identifizierer (PLID_1) mit dem eindeutigen Identifizierer (LID_1) zu speichern.

6. Ein Datenprozessierungssystem gemäß Anspruch 3, **dadurch gekennzeichnet, dass** das Datenprozessierungssystem ferner ein Steuer-Prozessierungselement aufweist, wobei das Steuer-Prozessierungselement dazu eingerichtet ist, die Applikation in Antwort auf das Interruptsignal zu rekonfigurieren.

7. Ein Datenprozessierungssystem gemäß Anspruch 1, **dadurch gekennzeichnet, dass** der Strom von Datenobjekten (DS_Q, DS_R, DS_S, DS_T) aufweist:
eine Vielzahl von Paketen, wobei die Vielzahl von Paketen dazu eingerichtet ist, Datenobjekte zu speichern;
ein dediziertes Paket (419), wobei das dedizierte Paket dazu eingerichtet ist, den eindeutigen Identifizierer (LID_1) zu speichern.

8. Ein Verfahren zum Steuern eines Datenprozessierungssystems, welches zumindest ein erstes Prozessierungselement (CPU, ProcA, ProcB, ProcC) und ein zweites Prozessierungselement (CPU, ProcA, ProcB, ProcC) zum Prozessieren eines Stroms von Datenobjekten (DS_Q, DS_R, DS_S, DS_T) aufweist, wobei das erste Prozessierungselement dazu eingerichtet ist, Datenobjekte des Stromes von Datenobjekten an das zweite Prozessierungselement zu übergeben und wobei das erste und das zweite Prozessierungselement für zum Ausführen einer Applikation eingerichtet sind, wobei die Applikation ein Set von Aufgaben (TP, TA, TB1, TB2, TC) aufweist, wobei jedes von dem ersten und dem zweiten Prozessierungselement dazu eingerichtet ist, ein oder mehrere Aufgaben des Sets von Aufgaben auszuführen, wobei das Verfahren zum Steuern den folgenden Schritt aufweist:
Erkennen eines eindeutigen Identifizierers (LID_1) mittels zumindest eines von dem ersten und dem zweiten Prozessierungselement,
**dadurch gekennzeichnet, dass** das Verfahren zum Steuern ferner die folgenden Schritte aufweist:
Einfügen des eindeutigen Identifizierers in den Strom von Datenobjekten,
Übergeben des eindeutigen Identifizierers von dem ersten Prozessierungselement zu dem zweiten Prozessierungselement,
Programmieren eines Identifizierers (PLID_1) in zumindest einer Aufgabe des Sets von Aufgaben (TP, TA, TB1, TB2, TC),
Vergleichen des eindeutigen Identifizierer (LID_1) mit dem programmierten Identifizierer (PLID_1) mittels eines korrespondierenden Prozessierungselements von dem ersten und dem zweiten Prozessierungselementen (CPU, ProcA, ProcB, ProcC),
Anhalten einer Aufgabe des Sets an Aufgaben (TP, TA, TB1, TB2, TC) mittels eines korrespondierenden Prozessierungselements von den ersten und zweiten Prozessierungselementen (CPU, ProcA, ProcB, ProcC) auf ein Übereinstimmen zwischen dem programmierbaren Identifizierer (PLID_1) von der Aufgabe und dem eindeutigen Identifizierer (LID_1) hin.

9. Ein Verfahren zum Steuern eines Datenprozessierungssystems gemäß Anspruch 8, **dadurch gekennzeichnet, dass** der Schritt des Einfügens des eindeutigen Identifizierer in den Strom von Datenobjekten (DS_Q, DS_R, DS_S, DS_T) mittels zumindest eines der Prozessierungselemente (CPU, ProcA, ProcB, ProcC) durchgeführt wird.

10. Ein Verfahren zum Steuern eines Datenprozessierungssystems gemäß Anspruch 8, **dadurch gekennzeichnet, dass** das Verfahren ferner den folgenden Schritt aufweist:
Erzeugen eines Interruptsignals mittels eines Prozessierungselements von den ersten und zweiten Prozessierungselementen (CPU, ProcA, ProcB, ProcC) auf ein Übereinstimmen zwischen dem programmierbaren Identifizierer (PLID_1) einer korrespondierenden Aufgabe der Vielzahl von Aufgaben (TP, TA, TB1, TB2, TC) und dem eindeutigen Identifizierer (LID_1) hin.

11. Ein Verfahren zum Steuern eines Datenprozessierungssystems gemäß Anspruch 8, **dadurch gekennzeichnet, dass** das Verfahren ferner den folgenden Schritt aufweist:
Speichern des eindeutigen Identifizierers (LID_1) mittels eines Prozessierungselements von den ersten und zweiten Prozessierungselementen (CPU, ProcA, ProcB, ProcC) für eine korrespondierende Aufgabe von der Vielzahl von Aufgaben (TP, TA, TB1, TB2, TC).

12. Ein Verfahren zum Steuern eines Datenprozessierungssystems gemäß Anspruch 8, **dadurch gekennzeichnet, dass** das Verfahren ferner den folgenden Schritt aufweist:
Speichern des Ergebnisses des Vergleichs des programmierbaren Identifizierer (PLID_1) mit dem eindeutigen Identifizierer (LID_1) mittels eines Prozessierungselements von den ersten und zweiten Prozessierungselementen (CPU, ProcA, ProcB, ProcC) für eine korrespondierende Aufgabe von der Vielzahl von Aufgaben (TP, TA, TB1, TB2, TC).

13. Ein Verfahren zum Steuern eines Datenprozessierungssystems gemäß Anspruch 10, **dadurch gekennzeichnet, dass** das Datenprozessierungssystem ferner ein Steuer-Prozessierungselement aufweist und das Verfahren ferner den Schritt aufweist:
Rekonfigurieren der Applikation mittels des Steuer-Prozessierungselements in Antwort auf das Interruptsignal.

14. Ein Verfahren zum Steuern eines Datenprozessierungssystems gemäß Anspruch 8, **dadurch gekennzeichnet, dass** der Strom von Datenobjekten (DS_Q, DS_R, DS_S, DS_T) aufweist:
eine Vielzahl von Paketen, wobei die Vielzahl von Paketen dazu eingerichtet ist, Datenobjekte zu speichern;
ein dediziertes Paket (419), welches dazu eingerichtet ist, den eindeutigen Identifizierer (LID_1) zu speichern.

## Revendications

1. Système de traitement de données, comprenant:
- au moins un premier élément de traitement (CPU, ProcA, ProcB, ProcC) et un deuxième élément de traitement (CPU, ProcA, ProcB, ProcC) pour le traitement d'un flux d'objets de données (DS_Q, DS_R, DS_S, DS_T), le premier élément de traitement étant agencé de manière à faire passer des objets du flux d'objets de données vers le deuxième élément de traitement,
dans lequel le premier et le deuxième élément de traitement (CPU, ProcA, ProcB, ProcC) sont agencés de manière à réaliser l'exécution d'une application, l'application comprenant un ensemble de tâches (TP, TA, TB1, TB2, TC), chacun des premier et deuxième éléments de traitement étant agencé de manière à exécuter une ou plusieurs tâches parmi l'ensemble de tâches,
et dans lequel au moins un parmi le premier et le deuxième élément de traitement est agencé de manière à pouvoir répondre à la réception d'un identificateur unique (LID_1),
**caractérisé par le fait que**
- le flux d'objets de données comporte en outre un identificateur unique et que le premier élément de traitement est en outre agencé de manière à faire passer l'identificateur unique au deuxième élément de traitement,
dans lequel au moins une tâche parmi l'ensemble de tâches (TP, TA, TB1, TB2, TC) est agencée de manière à avoir un identificateur programmable (PLID_1), dans lequel un élément de traitement correspondant parmi le premier et le deuxième élément de traitement (CPU, ProcA, ProcB, ProcC) est agencé de manière à comparer l'identificateur programmable (PLID_1) avec l'identificateur unique (LID_1), et
et dans lequel au moins un élément de traitement parmi le premier et le deuxième élément de traitement (CPU, ProcA, ProcB, ProcC) est agencé de manière à mettre en pause la tâche correspondante de l'ensemble de tâches (TP, TA, TB1, TB2, TC) en cas de correspondance entre l'identificateur programmable (PLID_1) et l'identificateur unique (LID_1).

2. Système de traitement de données selon la revendication 1, **caractérisé par le fait qu'**au moins un des éléments de traitement (CPU, ProcA, ProcB, ProcC) est agencé de manière à insérer l'identificateur unique (LID_1) dans le flux d'objets de données (DS_Q, DS_R, DS_S, DS_T).

3. Système de traitement de données selon la revendication 1, **caractérisé par le fait qu'**au moins un élément de traitement parmi le premier et le deuxième élément de traitement (CPU, ProcA, ProcB, ProcC) est agencé de manière à générer un signal d'interruption en cas de correspondance entre identificateur programmable (PLID_1) et l'identificateur unique (LID_1).

4. Système de traitement de données selon la revendication 1, **caractérisé par le fait qu'**au moins un élément de traitement parmi le premier et le deuxième élément de traitement (CPU, ProcA, ProcB, ProcC) est agencé de manière à stocker l'identificateur unique (LID_1).

5. Système de traitement de données selon la revendication 1, **caractérisé par le fait qu'**au moins un élément de traitement parmi le premier et le deuxième élément de traitement (CPU, ProcA, ProcB, ProcC) est agencé de manière à stocker le résultat de la comparaison de l'identificateur programmable (PLID_1) avec l'identificateur unique (LID_1).

6. Système de traitement de données selon la revendication 3, **caractérisé par le fait que** le système de traitement de données comporte en outre un élément de traitement de contrôle, dans lequel l'élément de traitement de contrôle est agencé de manière à reconfigurer l'application en réponse au signal d'interruption.

7. Système de traitement de données selon la revendication 1, **caractérisé par le fait que** le flux d'objets de données (DS_Q, DS_R, DS_S, DS_T) comporte :
- une pluralité de paquets, la pluralité de paquets étant agencés de manière à stocker des objets de données ;
- un paquet dédié (419), le paquet dédié étant agencé de manière à stocker l'identificateur unique (LID_1).

8. Procédé de commande d'un système de traitement de données, le système de traitement de données comprenant au moins un premier élément de traitement (CPU, ProcA, ProcB, ProcC) et un deuxième élément de traitement (CPU, ProcA, ProcB, ProcC) pour le traitement d'un flux d'objets de données (DS_Q, DS_R, DS_S, DS_T), dans lequel le premier élément de traitement est agencé de manière à faire passer des objets du flux d'objets de données vers le deuxième élément de traitement, et dans lequel le premier et le deuxième élément de traitement sont agencés de manière à réaliser l'exécution d'une application, l'application comprenant un ensemble de tâches (TP, TA, TB1, TB2, TC), chacun des premier et deuxième éléments étant agencé de manière à exécuter une ou plusieurs tâches parmi l'ensemble de tâches, le procédé de commande comprenant l'étape suivante:
- reconnaissance d'un identificateur unique (LID_1) par au moins un parmi le premier et le deuxième élément de traitement,
**caractérisé par le fait que** le procédé de commande comporte en outre les étapes suivantes:
- insertion de l'identificateur unique dans le flux d'objets de données,
- passage de l'identificateur unique du premier élément de traitement au deuxième élément de traitement,
- programmation d'un identificateur (PLID_1) dans au moins une tâche parmi l'ensemble de tâches (TP, TA, TB1, TB2, TC),
- comparaison de l'identificateur unique (LID_1) avec l'identificateur programmable (PLID_1) par un élément de traitement correspondant parmi le premier et le deuxième élément de traitement (CPU, ProcA, ProcB, ProcC),
- mise en pause d'une tâche de l'ensemble de tâches (TP, TA, TB1, TB2, TC) par un élément de traitement correspondant parmi le premier et le deuxième élément de traitement (CPU, ProcA, ProcB, ProcC) en cas de correspondance entre l'identificateur programmable (PLID_1) de ladite tâche et l'identificateur unique (LID_1).

9. Procédé de commande d'un système de traitement de données selon la revendication 8, **caractérisé par le fait que** l'insertion de l'identificateur unique dans le flux d'objets de données (DS_Q, DS_R, DS_S, DS_T) est effectuée par au moins un des éléments de traitement (CPU, ProcA, ProcB, ProcC).

10. Procédé de commande d'un système de traitement de données selon la revendication 8, **caractérisé par le fait que** le procédé comporte en outre l'étape suivante:
- génération d'un signal d'interruption par un élément de traitement parmi le premier et le deuxième élément de traitement (CPU, ProcA, ProcB, ProcC) en cas de correspondance entre l'identificateur programmable (PLID_1) de la tâche correspondante parmi la pluralité de tâches (TP, TA, TB1, TB2, TC) et l'identificateur unique (LID_1).

11. Procédé de commande d'un système de traitement de données selon la revendication 8, **caractérisé par le fait que** le procédé comporte en outre l'étape suivante:
- stockage de l'identificateur unique (LID_1) par un élément de traitement parmi le premier et le deuxième élément de traitement (CPU, ProcA, ProcB, ProcC) pour une tâche correspondante parmi la pluralité de tâches (TP, TA, TB1, TB2, TC).

12. Procédé de commande d'un système de traitement de données selon la revendication 8, **caractérisé par le fait que** le procédé comporte en outre l'étape suivante:
- stockage du résultat de la comparaison de l'identificateur programmable (PLID_1) avec l'identificateur unique (LID_1) par un élément de traitement parmi le premier et le deuxième élément de traitement (CPU, ProcA, ProcB, ProcC) pour une tâche correspondante parmi la pluralité de tâches (TP, TA, TB1, TB2, TC).

13. Procédé de commande d'un système de traitement de données selon la revendication 10, **caractérisé par le fait que** le système de traitement de données comporte en outre un élément de traitement de contrôle et que le procédé comporte en outre l'étape suivante:
- reconfiguration de l'application par l'élément de traitement de contrôle en réponse au signal d'interruption.

14. Procédé de commande d'un système de traitement de données selon la revendication 8, **caractérisé par le fait que** le flux d'objets de données (DS_Q, DS_R, DS_S, DS_T) comporte:
- une pluralité de paquets, la pluralité de paquets étant agencés de manière à stocker des objets de données;
- un paquet dédié (419), le paquet dédié étant agencé de manière à stocker l'identificateur unique (LID_1).
